**Europäisches Patentamt**

**European Patent Office**

**Office européen des brevets**

(19)

(11) Numéro de publication : **0 417 024 B1**

(12)

# FASCICULE DE BREVET EUROPEEN

(45) Date de publication du fascicule du brevet :
**22.07.92 Bulletin 92/30**

(51) Int. Cl.⁵ : **F15B 15/28, B25J 9/10, B25J 9/14**

(21) Numéro de dépôt : **90460031.9**

(22) Date de dépôt : **04.09.90**

(54) **Ensemble piston-cylindre muni de moyens de détermination et de validation de la position du piston.**

(30) Priorité : **05.09.89 FR 8911732**

(43) Date de publication de la demande :
**13.03.91 Bulletin 91/11**

(45) Mention de la délivrance du brevet :
**22.07.92 Bulletin 92/30**

(84) Etats contractants désignés :
**AT BE CH DE DK ES GB GR IT LI LU NL SE**

(56) Documents cités :
**WO-A-87/06656
DE-A- 2 945 895
DE-A- 3 510 252
DE-U- 8 632 990**

(56) Documents cités :
**FR-A- 2 605 686
GB-A- 2 163 260
US-A- 4 723 503
US-A- 4 730 861**

(73) Titulaire : **Roudaut, Philippe Robert Louis
142, rue du Général Leclerc
F-95120 Ermont (FR)**

(72) Inventeur : **Roudaut, Philippe Robert Louis
142, rue du Général Leclerc
F-95120 Ermont (FR)**

(74) Mandataire : **Le Guen, Louis François
Cabinet Louis Le Guen 38, rue Levavasseur
B.P. 91
F-35802 Dinard Cédex (FR)**

EP 0 417 024 B1

Jouve, 18, rue Saint-Denis, 75001 PARIS

## Description

L'invention concerne un ensemble piston-cylindre muni de moyens de détermination et de validation de la position d'un piston, notamment d'un piston faisant partie d'un ensemble piston-cylindre tel que celui d'un vérin ou celui d'une butée de validation de fin de course d'un mobile équipant un robot. Dans le cas d'un piston de vérin, il pourra s'agir d'un vérin utilisé dans une pince pneumatique de préhension, en particulier d'une pince de préhension pour un robot manipulateur.

Les robots manipulateurs sont généralement constitués de pinces de préhension fixées au bout de bras et servent à transporter, une à la fois, des pièces d'un poste à un autre. Ces robots manipulateurs sont pilotés par des automates programmés qui commandent séquenciellement les différents vérins de ces robots suivant des phases de commande prédéterminées. A la réception d'un signal électrique ou pneumatique validant la fin d'une phase, l'automate déclenche la phase suivante.

Dans le cas d'une validation de la fin de course d'un mobile équipant un robot, il est connu d'utiliser un ensemble piston-cylindre dont le piston agit sur un commutateur lorsqu'il arrive en bout de course. Le document FR-A-2 605 686 décrit un ensemble piston-cylindre de ce type. Le piston est muni, dans la région de la périphérie externe, d'un aimant permanent qui agit, en bout de course, sur un commutateur actionné sans contact par le champ magnétique de l'aimant.

Pour accélérer la succession des phases, il peut être intéressant de fournir, en plus du signal de validation de fin de course du piston, un signal prévenant, en quelque sorte, l'automate que la fin de course est proche. A la réception de ce signal supplémentaire, il prépare la phase suivante qu'il ne déclenchera réellement et effectivement qu'à la réception du signal de validation de fin de course. Pour arriver à ce résultat, on pourrait penser à utiliser deux commutateurs, l'un étant légèrement décalé par rapport à l'autre. Cette solution présente l'inconvénient que le réglage de la position d'un commutateur par rapport à l'autre ne peut être modifié rapidement et souplement.

On a pensé à utiliser des capteurs de champ magnétique dont la caractéristique est de fournir à leurs bornes une tension qui est proportionnelle au champ magnétique qui règne à l'endroit de la détection. Cette tension est fournie à des comparateurs dont les valeurs seuils représentent des positions prédéterminées du piston. Les comparateurs fournissent des signaux logiques qui sont directement exploités par l'automate.

Ce système, à capteurs de champ magnétique, présente des problèmes d'encombrement lié aux positionnements des potentiomètres de réglage des valeurs de seuils des comparateurs. De plus, pour des raisons de commodité lors du réglage des positions de validation, et donc des valeurs de seuils, ces potentiomètres ne peuvent pas être placés à proximité de l'ensemble piston-cylindre qui envoie les signaux de validation à l'automate. Par ailleurs, dans le cas où ils sont placés sur le tableau de commande de l'automate, la liaison électrique entre l'ensemble piston-cylindre et l'automate véhicule des signaux analogiques, issus des capteurs, qui présentent des niveaux de tension faibles. De plus, des parasites interfèrant inévitablement avec cette liaison, ces signaux peuvent présenter un rapport signal à bruit suffisament important pour qu'ils ne puissent pas être transmis de manière fiable.

Par ailleurs, ce système manque de souplesse. En effet, le fait d'ajouter une nouvelle position de validation sur l'ensemble piston-cylindre implique d'ajouter un nouveau comparateur, un nouveau potentiomètre et de nouveaux fils entre l'ensemble piston-cylindre et l'automate.

Notons, enfin, que tout ce qui vient d'être dit s'applique également à un ensemble piston-cylindre constituant un vérin muni d'un dispositif de détermination et de validation de la position du piston tel que ceux qui équipent des pinces de préhension d'un robot manipulateur.

Le but de l'invention est donc de prévoir un ensemble piston-cylindre qui est muni de moyens de détermination et de validation de la position du piston et qui ne présente pas les inconvénients mentionnés ci-dessus.

L'invention consiste en un ensemble piston-cylindre comportant un piston pouvant coulisser axialement dans un cylindre, ce piston étant prolongé, dans son axe, par une tige sortant par le fond avant du cylindre, un aimant permanent, solidaire du piston, créant un champ magnétique qui est mesuré par un capteur linéaire de champ magnétique par effet Hall, la tension fournie par le capteur servant à former des signaux de validation pour un automate.

Selon une caractéristique de l'invention, cet ensemble piston-cylindre comporte, en outre, fixée dans un logement prévu dans le cylindre, une carte électronique sur laquelle sont montés, d'une part, un ou des capteurs linéaires à effet Hall et, d'autre part, un organe de contrôle programmé des signaux analogiques issus du ou des capteurs qui fournit à l'automate des signaux logiques validant, lors de l'interruption de la course du piston, la position de ce piston dans l'une des positions préalablement déterminées et mémorisées par l'organe de contrôle.

Le fait de monter les capteurs et l'organe de contrôle sur une carte fixée dans un logement prévu dans le cylindre résout les problèmes d'encombrement mentionnés ci-dessus. En effet, le réglage des valeurs de seuils ne se fait plus à l'aide de potentiomètres, mais par programmation de l'organe de contrôle.

Par ailleurs, la liaison de cet organe à l'automate véhicule des signaux logiques et est donc, de ce fait, moins sensible aux bruits.

Selon une autre caractéristique de l'invention, l'organe de contrôle est constitué d'un microcontrôleur comportant des ports d'entrée auxquels sont raccordés le ou les capteurs à effet Hall et l'automate, et des ports de sortie reliés à l'automate, et d'au moins une mémoire stockant les programmes des tâches que doit exécuter le microcontrôleur.

Selon une autre caractéristique de l'invention, sur la carte électronique, n'est monté qu'un seul capteur linéaire à effet Hall.

Selon une autre caractéristique de l'invention, l'ensemble piston-cylindre ainsi équipé constitue une butée de validation de fin de course.

Selon une autre caractéristique de l'invention, sur la carte électronique, sont montés deux capteurs linéaires à effet Hall.

Selon une autre caractéristique de l'invention, cet ensemble piston-cylindre constitue le vérin pneumatique d'une pince de préhension d'un robot manipulateur et le signal électrique et logique fourni à l'automate sert de signal de validation de la prise, par les doigts de cette pince, d'une pièce selon l'une de ses dimensions.

Les caractéristiques de l'invention mentionnées ci-dessus, ainsi que d'autres, apparaîtront plus clairement à la lecture de la description suivante d'un exemple de réalisation préféré de l'invention, ladite description étant faite en relation avec les dessins joints, parmi lesquels:

la Fig. 1 est une vue schématique d'un ensemble piston-cylindre selon l'invention comportant un seul capteur de champ magnétique,

la Fig. 2 est une vue schématique d'un ensemble piston-cylindre selon l'invention comportant deux capteurs,

la Fig. 3 un schéma de la carte électronique équipant un ensemble piston-cylindre selon l'invention,

les Figs. 4a à 4c montrent le fonctionnement d'un ensemble piston-cylindre, tel que représenté à la Fig. 1,

la Fig. 5 représente une pince de préhension utilisant un ensemble piston-cylindre, tel que représenté à la Fig. 2, et

les Figs. 6a et 6b montrent le fonctionnement d'une pince équipée d'un ensemble piston-cylindre selon l'invention.

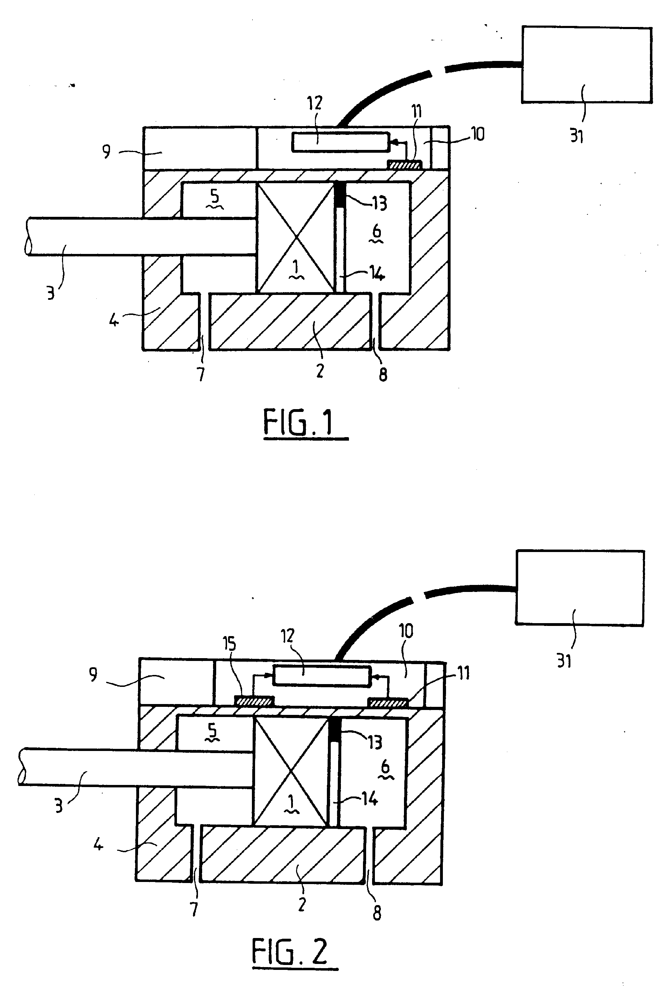

L'ensemble représenté à la Fig. 1 comprend essentiellement un piston 1 pouvant coulisser axialement dans un cylindre 2. Le piston 1 est prolongé, dans son axe, par une tige 3 qui sort par le fond avant 4 du cylindre 2. Le cylindre 2 et le piston 1 forment deux chambres 5, 6 respectivement reliées, pneumatiquement ou hydrauliquement, à l'extérieur par deux conduits 7, 8. L'ensemble piston-cylindre peut former un vérin à double effet et les deux conduits 7, 8 permettent alors l'envoi de fluide sous-pression dans l'une ou l'autre des deux chambres 5, 6. Un ensemble piston-cylindre de ce type peut être utilisé pour commander les doigts d'une pince de préhension d'un robot manipulateur. Il peut également former une butée de validation de fin de course d'un mobile équipant un tel robot. Les deux conduits 7, 8 permettent alors de maintenir les deux chambres 5, 6 à la même pression lors du déplacement du piston 1 dans le cylindre 2.

Parallèlement à l'axe principal de l'ensemble piston-cylindre 1, 2 et sur la surface extérieure du cylindre 2, se trouve une gorge 9 dans laquelle est fixée une carte électronique 10 sur laquelle sont montés, d'une part, un capteur de champ magnétique à effet Hall 11 et, d'autre part, un organe de contrôle 12. Le capteur à effet Hall 11 est avantageusement du type linéaire, c'est-à-dire qu'il fournit à ses bornes une tension qui est proportionnelle à l'intensité du champ magnétique qui règne à l'endroit de la détection. Ce champ magnétique a pour origine un aimant permanent 13 qui est monté sur la face 14 du piston qui est opposée à la tige 3. Cet aimant 13 pourrait être fixé à tout autre endroit, dès lors qu'il est solidaire du piston 1 et qu'il influe sur le capteur 11 de telle manière que celui-ci délivre une tension qui est directement proportionnelle à la course du piston.

On a représenté à la Fig. 2, une variante de réalisation de la présente invention. Sur cette figure, les mêmes éléments que ceux de la Fig. 1 portent les mêmes références. Deux capteurs à effet Hall 11, 15, également du type linéaires, sont montés sur la carte électronique 10 et délivrent, chacun, une tension de mesure à l'organe de contrôle 12. On préfère cette réalisation à deux capteurs lorsque la course du piston est importante. En effet, l'expérience a montré que les capteurs à effet Hall ne sont suffisamment sensibles, pour une exploitation correcte des signaux qu'ils fournissent et vu les aimants permanents utilisés, que pour des courses du piston de l'ordre de quelques millimètres. Lorsqu'elles sont plus importantes, de l'ordre de quelques dizaines de millimètres, l'utilisation de deux capteurs, chacun mesurant une partie seulement de la course, est nécessaire.

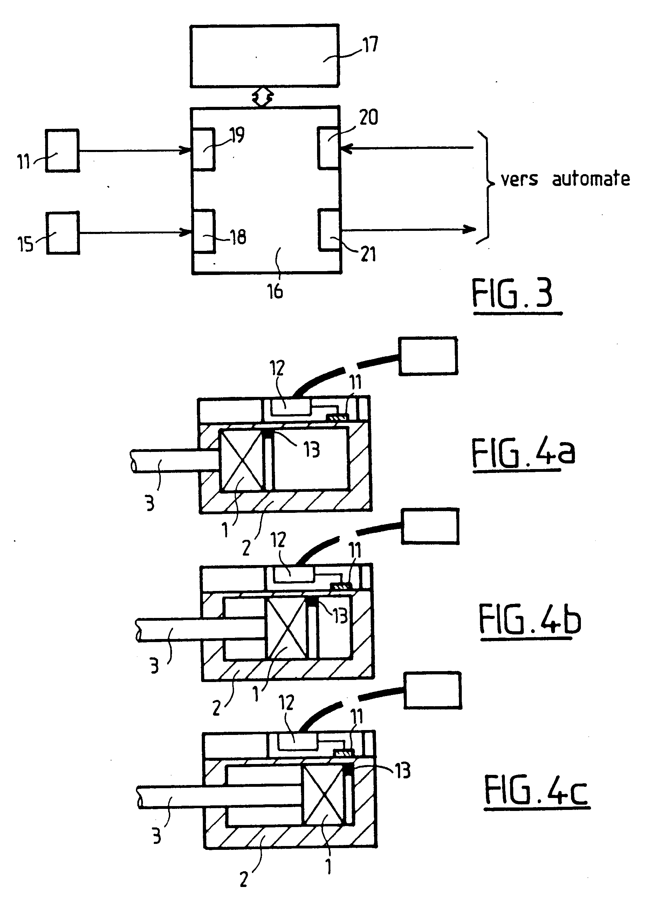

Un schéma électrique de la carte électronique est montrée à la Fig. 3. L'élément essentiel de cette carte est un microcontrôleur 16 qui est un composant électronique intégré dont le fonctionnement est lié à un programme écrit dans une mémoire 17, par exemple du type EEPROM ou EPROM, à laquelle il est relié. Ce microcontrôleur 16 est muni de ports d'entrée 18, 19 pouvant recevoir des tensions analogiques, d'au moins un port d'entrée 20 pouvant recevoir des signaux à niveaux logiques et d'au moins un port de sortie 21 pouvant délivrer des signaux logiques. Ce microcontrôleur est, par exemple, un microcontrôleur référencé 87 C 752 et commercialisé par la société Philips. Il présente l'avantage, sur d'autres microcontrôleurs qui pourraient convenir ici, d'être de faibles dimensions. Dans la mémoire 17, sont stockées les différentes étapes d'un programme. A chaque étape, le microcontrôleur effectue une opération qui peut consister, soit à lire la tension présente sur le port 18, ou celle présente sur le port 19, soit à comparer une des tensions lues à une étape antérieure à des valeurs de seuils mémorisées, ou calculées, soit à lire un niveau logique présent sur le port 20, soit, encore fournir un niveau sur le port 21, niveau dépendant, par exemple, d'opérations effectuées à une étape antérieure. Les deux ports d'entrée 18, 19 reçoivent les signaux de mesure des capteurs à effet Hall 11, 15. Un des ports d'entrée de type logique 20 reçoit des signaux de commande d'un automate 31. Ces signaux de commande servent à fournir au microcontrôleur 16, au moyen du seul automate, les valeurs de seuil qu'il utilise pour déterminer les positions du piston qu'il doit valider. Le port de sortie 21 produit des signaux à niveaux logiques qui sont transmis à l'automate et qui servent à la validation de la position du piston dans l'une des positions que l'on a préalablement mémorisées.

L'automate 31 est l'organe qui mémorise les différentes phases d'un cycle à exécuter par le robot et qui commande, pour chaque phase, le ou les vérins pneumatiques appropriés. Une nouvelle phase est lancée dès que l'automate a reçu, soit du vérin lui-même, soit d'une butée de validation de fin de course, des signaux logiques qui le renseignent sur le déroulement et/ou l'achèvement de la phase en cours.

Le fonctionnement de l'ensemble piston-cylindre muni des moyens de détermination et de validation de la position du piston, tel qu'il est représenté à la Fig. 1, est maintenant décrit en relation avec les Figs. 4a à 4c.

Rappelons que, cet ensemble ne comporte qu'un seul capteur et est adapté, de ce fait, à une utilisation en tant que butée de validation de fin de course.

Lorsque le piston 1 est en position avancée, Fig. 4a, (il peut y être maintenu par un ressort non représenté), l'aimant permanent 13 n'influe que faiblement sur le capteur linéaire 11 qui envoie ainsi une faible tension au microcontrôleur 16. Quand le piston 1 se déplace vers l'arrière, soit qu'un mobile, tel que, par exemple, le bras de l'actionneur d'un robot, appuie sur l'extrémité extérieure de la tige 3, soit que le piston 1 est soumis à une surpression sur la face côté tige, il arrive à la position, représentée à la Fig. 4b, dans laquelle l'influence de l'aimant permanent 13 sur le capteur 11 est augmentée par rapport à la position précédente. La tension délivrée par le capteur 11 augmente. Elle est fournie au microcontrôleur 16 qui la compare à une valeur de seuil mémorisée lors de la programmation de l'automate. Une fois cette valeur de seuil dépassée, ce qui peut être le cas à la Fig. 4b, le microcontrôleur envoie un signal logique à l'automate qui pourra alors commencer à préparer la phase suivante. Lorsque le piston 1 arrive en bout de course, Fig. 4c, l'influence de l'aimant 13 sur le capteur 11 ainsi que la tension aux bornes du capteur 11 sont maximales. Le microcontrôleur 16 compare cette tension à une seconde valeur de seuil qui est atteinte lorsque le piston est en bout de course. A ce moment, il envoie à l'automate un second signal logique correspondant à une validation de fin de course du piston. L'automate peut alors déclencher la phase suivante.

Ainsi, par l'utilisation d'un microcontrôleur pouvant stocker plusieurs valeurs de seuils, la préparation d'une phase peut être avancée par rapport au déclenchement effectif de cette phase.

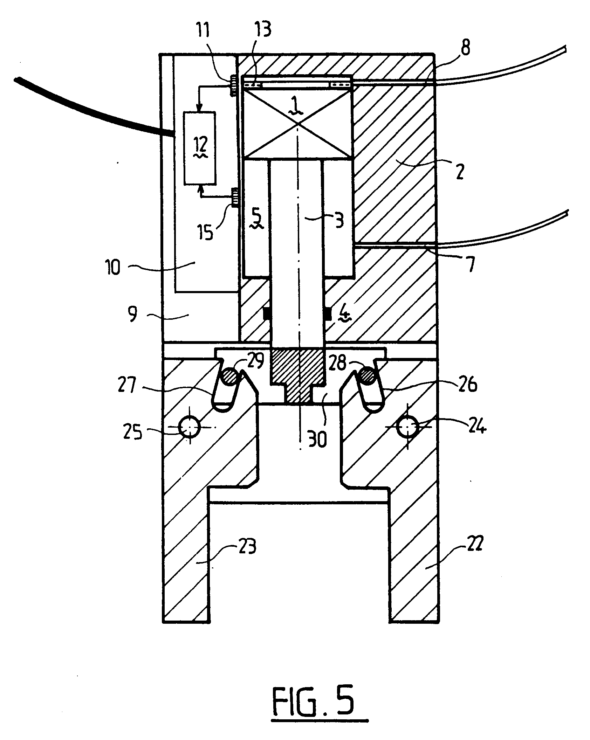

A la Fig. 5, est montrée une pince de préhension pneumatique comportant un ensemble piston-cylindre muni de deux capteurs linéaires 11, 15 à effet Hall. Sur cette figure, les mêmes éléments qu'aux figures précédentes portent les mêmes références. Cette pince comporte deux doigts 22, 23 pouvant pivoter autour de deux axes 24, 25. Dans des rainures 26, 27 prévues dans la partie supérieure des doigts 22, 23, au-dessus des deux axes 24, 25, deux barreaux 28, 29 fixés sur une pièce de manoeuvre 30 peuvent coulisser pour entraîner les doigts 22, 23. Cette pièce de manoeuvre est solidaire de la tige 3 qui est entraînée par un piston 1 coulissant dans un cylindre 2 percé radialement de deux trous 7, 8 formant des arrivées d'air sous pression. Cet ensemble piston-cylindre constitue un vérin à double effet commandé pneumatiquement par l'air envoyé dans les trous 7 et 8.

Le fonctionnement d'une pince de ce type est décrite, par exemple, dans le document FR-A-2 638 670. Rappelons seulement, ici, que le déplacement linéaire de la tige 3, dû à la surpression d'air sur l'une des faces du piston 1, entraîne celui de la pièce de manoeuvre 30 qui, au moyen des barreaux 28, 29, fait pivoter les doigts 22, 23, ceux-ci s'ouvrant ou se fermant alors, suivant la face du piston qui a reçu la surpression.

La pince montrée à la Fig. 5 est du type à doigts pivotants. L'invention s'applique également à des pinces dont les doigts s'ouvrent et se ferment par un mouvement de translation latéral.

Dans une gorge 9 prévue dans le cylindre 2, est fixée la carte électronique 10 avec son organe de contrôle 12 et ses deux capteurs linéaires de champ magnétique 11, 15.

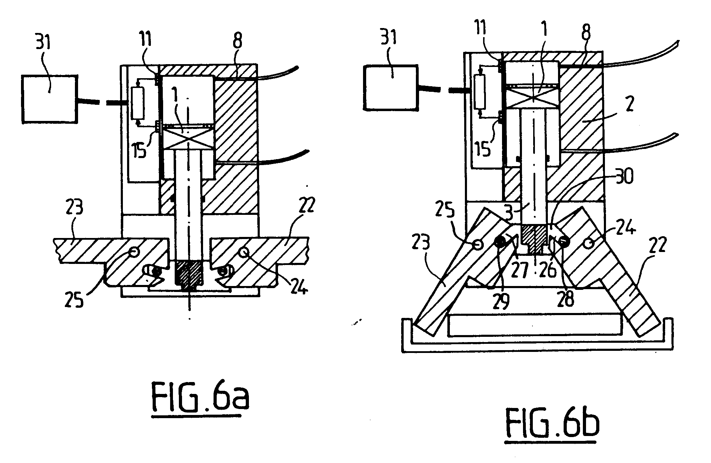

A la Fig. 6a, la pince est complètement ouverte. Le capteur 11 délivre au microcontrôleur 16 une tension très faible alors que le capteur 15 lui délivre une tension maximale. L'automate, dans la phase en cours, peut commander la fermeture des doigts de la pince. L'envoi d'air dans la canalisation 8 permet alors la montée lente du piston 1. Les deux tensions délivrées par les capteurs 11, 15 évoluent lentement, jusqu'au moment où, les doigts entrant en contact avec la pièce à serrer, Fig. 6b, elles deviennent constantes. Le microcontrôleur les compare alors à des valeurs de seuils mémorisées pendant la phase de programmation et envoie à l'automate un signal dont le niveau logique est représentatif du résultat de cette comparaison. L'automate, suivant sa programmation, fournit alors à la pince, mais aussi à d'autres organes qu'il pilote, les commandes pneumatiques appropriées.

Par exemple, si les tensions mesurées correspondent aux valeurs seuils de prise de la pièce suivant sa longueur, l'automate commande seulement le serrage de la pièce, alors que, si ces tensions correspondent à une prise par la largeur, il commande, après ce serrage, une rotation de 90°. On voit, à travers cet exemple, que l'utilisation d'un microcontrôleur pouvant stocker plusieurs valeurs de seuils, permet de positionner la pièce serrée et de la préparer pour la phase suivante, quelque soit la manière dont la première prise a été effectuée. Le microcontrôleur permet également de valider une prise de pièce. En effet, si cette prise n'est pas correcte, il peut en commander une nouvelle, et ce jusqu'à ce qu'elle devienne correcte. Ainsi, dans le cas où les tensions mesurées lors de l'arrêt des doigts ne correspondent à aucunes valeurs mémorisées, le microcontrôleur envoie à l'automate un signal logique qu'il interprète selon sa programmation. Celui-ci peut alors commander l'ouverture totale des doigts puis, de nouveau leur fermeture et le serrage de la pièce, et ce, jusqu'à ce que la prise soit correcte, c'est-à-dire lorsque les tensions mesurées à l'arrêt des doigts sur la pièce correspondent à des valeurs mémorisées par le microcontrôleur.

## Revendications

1. Ensemble piston-cylindre comportant un piston (1) pouvant coulisser axialement dans un cylindre (2), ce piston (1) étant prolongé, dans son axe, par une tige (3) sortant par le fond avant (4) du cylindre (2), un aimant (13) permanent, solidaire du piston (1), créant un champ magnétique qui est mesuré par un capteur linéaire de champ magnétique (11) à effet Hall, la tension fournie par le capteur (11) servant à former des signaux de validation pour un automate (31), caractérisé en ce qu'il comporte, en outre, fixée dans un logement (9) prévu dans le cylindre (2), une carte électronique (10) sur laquelle sont montés, d'une part, un ou des capteurs linéaires à effet Hall (11, 15) et, d'autre part, un organe (12) de contrôle par programme des signaux analogiques issus du ou des capteurs (11, 15) qui fournit à l'automate (31) des signaux logiques validant, lors de l'interruption de la course du piston (1), la position de ce piston dans l'une des positions préalablement déterminées et mémorisées par l'organe de contrôle (12).

2. Ensemble selon la revendication 1, caractérisé en ce l'organe de contrôle (12) est constitué d'un microcontrôleur (16) comportant des ports d'entrée (18, 19, 20) auxquels sont raccordés le ou les capteurs à effet Hall (11, 15) et l'automate (31) et un port de sortie (21) reliés à l'automate (31) et d'au moins une mémoire (17) stockant les programmes des tâches que doit exécuter le microcontrôleur (16).

3. Ensemble selon la revendication 1 ou 2, caractérisé en ce que, sur la carte électronique (10), n'est monté qu'un seul capteur linéaire à effet Hall (11).

4. Ensemble selon la revendication 3, caractérisé en ce qu'il constitue une butée de validation de fin de course.

5. Ensemble selon la revendication 1 ou 2, caractérisé en ce que, sur la carte électronique (10), sont montés deux capteurs linéaires à effet Hall (11, 15).

6. Ensemble selon la revendication 5, caractérisé en ce que, d'une part, il constitue le vérin pneumatique d'une pince de préhension d'un robot manipulateur, et en ce que, d'autre part, le signal électrique et logique fourni à l'automate (31) sert de signal de validation de la prise, par les doigts (22, 23) de cette pince, d'une pièce selon l'une de ses dimensions.

## Patentansprüche

1. Kolben-Zylinder-Vorrichtung mit einem Kolben (1), der axial in einem Zylinder (2) verschiebbar ist und der in Richtung seiner Achse mit einer Kolbenstange versehen ist, die aus dem vorderen Ende (4) des Zylinders (2) herausragt, einem Permanentmagneten (13), der sich einstückig mit dem Kolben (1) bewegt und ein Magnetfeld erzeugt, das durch einen linearen Magnetfeldsensor (11) gemessen wird, der mit dem Hall-Effekt arbeitet, wobei die durch den Sensor (11) gelieferte Spannung zur Bildung von Gültigkeits-Signalen für einen Automaten (31) dient, dadurch gekennzeichnet, daß sie ferner eine in einem Raum (9) im Zylinder (2) angebrachte elektronische Platine (10) aufweist, auf der einerseits einer oder mehr lineare Sensoren, die mit Hall-Effekt (11, 15) arbeiten, und andererseits ein Steuerelement (12) angebracht ist, das mit analogen Signalen arbeitet, die von dem Sensor oder den Sensoren (11, 15) kommen, und das an den Automaten (31) logische Signale gibt, die wenn der Lauf des Kolbens (1) gestoppt ist, die Position des Kolbens in einer der Positionen bestätigen, die zuvor durch das Steuerelement (12) bestimmt und gespeichert worden sind.

2. Vorrichtung nach Anspruch 1, dadurch gekennzeichnet, daß das Steuerelement (12) aus einem Mikro-Controller (16) besteht, der Eingangsöffnungen (18, 19, 20) aufweist, an welche der Sensor oder die Sensoren (11, 15), die mit Hall-Effekt arbeiten, und der Automat (31) angeschlossen sind, daß es ferner eine Ausgangsöffnung (21), die mit dem Automaten (31) verbunden ist, sowie wenigstens einen Speicher (17) aufweist, der die Programme für die Aufgaben speichert, welche der Mikro-Controller (16) auszuführen hat.

3. Vorrichtung nach Anspruch 1 oder 2, dadurch gekennzeichnet, daß auf der elektronischen Platine (10) nur ein linearer Sensor (11), der mittels Hall-Effekt arbeitet, angebracht ist.

4. Vorrichtung nach Anspruch 3, dadurch gekennzeichnet, daß sie eine Anschlag-Einrichtung bildet für die Wirksamkeit des Lauf-Endes.

5. Vorrichtung nach Anspruch 1 oder 2, dadurch gekennzeichnet, daß auf der elektronischen Platine (10) zwei lineare Sensoren (11, 15), die mittels Hall-Effekt arbeiten, montiert sind.

6. Vorrichtung nach Anspruch 5, dadurch gekennzeichnet, daß sie einerseits den pneumatischen Zylinder der Greifzangen eines Manipulator-Roboters bildet, und daß andererseits das dem Automaten (31) zugeführte elektrische und logische Signal als Signal dient für die Wirksamkeit dafür, daß ein Werkstück gemäß einer seiner Abmessungen durch die Finger (22, 23) dieser Zangen erfaßt worden ist.

**Claims**

1. A piston-cylinder assembly comprising a piston (1) capable of axially sliding in a cylinder (2), that piston (1) being extended, in the direction of its axis, by a rod (3) coming out of the forward end (4) of cylinder (2), a permanent magnet (13), coming as one piece with the piston (1), creating a magnetic field that is measured by a linear magnetic field sensor (11) working with Hall effect, the voltage supplied by the sensor (11) serving to form validation signals for an automaton (31), characterised in that it comprises in addition, fixed inside a lodging (9) provided in cylinder (2), an electronic board (10) on which are mounted for one part one or more linear sensors working with Hall effect (11, 15) and for the other part, a controlling member (12) working by analog signals coming from the sensor or sensors (11, 15), that supplies to the automaton (31) logical signals that validate, when the run of the piston (1) is stopped, the position of that piston in one of the positions that have been previously determined and memorized by the controlling member (12).

2. An assembly according to Claim 1, characterised in that the controlling member (12) is made up of a microcontroller (16) having input ports (18, 19, 20) to which are connected the sensor or sensors (11, 15) working by Hall effect and the automaton (31), and an output port (21) connected to the automaton (31), and of at least one memory (17) that stores the programs for the tasks that microcontroller (16) is to carry out.

3. An assembly according to Claim 1 or 2, characterised in that, on the electronic board (10) there is mounted only one linear sensor (11) working by Hall effect.

4. An assembly according to Claim 3, characterised in that it constitutes stop-motion device for the validation of the end-of-run.

5. An assembly according to Claim 1 or 2, characterised in that, on the electronic board (10), there are mounted two linear sensors (11, 15) working by Hall effect.

6. An assembly according to Claim 5, characterised in that, for one part, it constitutes the pneumatic jack of the prehension pincers of a manipulator robot, and in that, for the other part, the electric and logical signal supplied to the automaton (31) serves as signal for the validation of the grabbing, by the fingers (22, 23) of those pincers, of a piece according to one of its dimensions.

FIG.1

FIG.2

FIG.3

FIG.4a

FIG.4b

FIG.4c

vers automate

FIG. 5

FIG.6a

FIG.6b

EP 0 417 024 B1